# EUROPEAN PATENT SPECIFICATION

(11) **EP 3 489 618 B1**
(45) Date of publication and mention of the grant of the patent: **24.03.2021**
(21) Application number: 16909556.9
(22) Date of filing: 22.07.2016
(51) Int. Cl.: G01B 11/00, H04B 10/114, H04M 1/00

(54) **POSITION ESTIMATION PROGRAM, POSITION ESTIMATION DEVICE, AND POSITION ESTIMATION METHOD**
POSITIONSSCHÄTZUNGSPROGRAMM, POSITIONSSCHÄTZUNGSVORRICHTUNG UND POSITIONSSCHÄTZUNGSVERFAHREN
PROGRAMME D'ESTIMATION DE POSITION, DISPOSITIF D'ESTIMATION DE POSITION, ET PROCÉDÉ D'ESTIMATION DE POSITION

(43) Date of publication of application: 29.05.2019
(73) Proprietor: Fujitsu Limited, Kawasaki-shi, Kanagawa 211-8588 (JP)
(72) Inventor: KATO, Keizo, Kawasaki-shi Kanagawa 211-8588 (JP); KURAKI, Kensuke, Kawasaki-shi Kanagawa 211-8588 (JP); TANAKA, Ryuta, Kawasaki-shi Kanagawa 211-8588 (JP)
(74) Representative: Hoffmann Eitle
(86) International application number: PCT/JP2016/071645
(87) International publication number: WO 2018/016081

(56) References cited:
- JP-A- 2005 303 682
- JP-A- 2009 088 704
- JP-A- 2011 209 269
- JP-B2- 4 978 450
- JP-B2- 5 200 873
- JP-B2- 5 200 873
- US-A1- 2014 199 082
- US-B1- 8 334 901

## Description

### TECHNICAL FIELD

The present invention relates to a position estimation program, a position estimation device, and a position estimation method.

### BACKGROUND ART

One of techniques for grasping the position of the user using a mobile terminal is a GPS (Global Positioning System). The GPS is a technique of measuring the position of the mobile terminal based on signals received from a plurality of artificial satellites. Since the signal is transmitted from the artificial satellite by a radio wave, it is difficult to measure the position of the mobile terminal in the indoor place where the radio wave is interrupted.

For example, PTL 1 discloses the technique of measuring the position of the mobile terminal in the indoor place where the radio wave is interrupted. PTL 1 discloses the technique using a plurality of illumination instruments for transmitting position information. Each of the plurality of illumination instruments transmits the position information pertaining to the position at which the illumination instrument is installed, which is superimposed on illumination light. The position information transmitted from the plurality of illumination instruments is received by a mobile terminal held by the user. The mobile terminal detects, together with the position information received from the plurality of illumination instruments, the intensity and angle of the light emitted from the plurality of illumination source. The mobile terminal may calculate the own position information based on the received position information, and the intensity and angle of the light.

JP 2010 117301 A discloses a visible light communication navigation system including many lighting apparatuses to transmit data including positional information on own apparatus by superimposing on the illumination light, and a receiving terminal. The receiving terminal includes a determination section to determine the position and direction of the receiving terminal, and first and second light-receiving means that have different light-receiving ranges for receiving the illumination light from the lighting apparatuses. The determination section determines the position for the receiving terminal from the positional information superimposed on the illumination light received by the first light-receiving means and determines the direction using the positional information superimposed on the illumination light received by the first light-receiving means as a starting point and the positional information superimposed on the illumination light received by the second light-receiving means as an ending point to be the direction of the receiving terminal. Thereby the direction can be determined without any history for the positional information.

US 8,334,901 B1 discloses a method for modulating a beacon light source in a light based positioning system. In some embodiments, the method includes selecting a modulation scheme for the light source, the modulation scheme periodically varying an output of the light source from a peak output level to a bottom output level, applying the modulation scheme to the light source, and adding a DC bias to the modulation scheme, the DC bias reducing the peak output level and increasing the bottom output level of the modulation scheme. In some embodiments, the peak output level is increased beyond an un-modulated output of the light source and an average output of the light source is substantially equal to the un-modulated output of the light source. In some embodiments, the peak output level includes an unmodulated output of the light source.

US 2014/0199082 A1 discloses a portable terminal that sends to a second server sound contents request information comprising a tag ID corresponding to light received from an illumination device, the light-receiving position on the light-receiving surface, and the area ratio of the light-receiving range to the light-receiving surface in order to acquire sound contents. The second server combines individual sound contents corresponding to the tag ID in the sound contents request information, first basic sound contents corresponding to the light-receiving position, and second basic sound contents corresponding to the area ratio. Then, the second server creates sound contents for giving information about the object present at the location where the illumination device emitting the light corresponding to the tag ID is installed and the direction and distance of the object when seen from the portable terminal and sends the sound contents to the portable terminal.

### CITATION LIST

### PATENT LITERATURES

PTL 1: Japanese Patent No. 5200873
PTL 2: Japanese Patent No. 5683737
PTL 3: Japanese Patent No. 4978450
PTL 4: International Publication Pamphlet No. WO 2016/001972
PTL 5: Japanese Patent No. 5760438
PTL 6: Japanese Patent No. 5294096

### SUMMARY

### TECHNICAL PROBLEM

However, according to the conventional technique, it is required that a special device for measuring the position is installed in advance, and the measurement accuracy depends on the interval between the installed illuminations. To increase the spatial resolution of measurement, the interval between the illuminations has to be decreased according to the spatial resolution. That is, it is required to increase the number of installed illuminations. For example, according to the technique disclosed in PTL 1, to accurately calculate the position of the mobile terminal, it is required that a large number of illumination instruments that transmit the position information via the optical signal is installed in advance. Such problem of the conventional art is caused by the fact that position information transmitted from the illumination instrument via visible light is received by a camera of the mobile terminal.

The disclosed technique is devised in consideration of the above-mentioned situation, and an object thereof is to provide a position estimation program, a position estimation device, and a position estimation method that may accurately estimate the position of the mobile terminal without using a GPS and installing a large number of instruments for transmitting position information.

### SOLUTION TO PROBLEM

To solve the above-mentioned problem and attain the above-mentioned object, a position estimation program of the present disclosure causes a computer to execute processes for capturing an image having identification information pertaining to an information terminal, the identification information being delivered via an optical signal, extracting the identification information from the captured image, and transmitting notification information corresponding to the estimated position to the outside based on the identification information, wherein the transmitting includes identifying the mobile terminal of a destination based on the identification information and transmitting the notification information to the identified mobile terminal.

### ADVANTAGEOUS EFFECTS OF INVENTION

The position estimation program, the position estimation device, and the position estimation method from an aspect of the present invention have the advantageous effect of accurately estimating the position of the information terminal without using a GPS and installing a large number of instruments for transmitting position information.

### BRIEF DESCRIPTION OF DRAWINGS

[FIG. 1] FIG. 1 is a conceptual view of a position estimation system including a position estimation device.
[FIG. 2] FIG. 2 is a hardware configuration view of a mobile terminal.
[FIG. 3] FIG. 3 is a hardware configuration view of a position estimation device.
[FIG. 4] FIG. 4 is an example of a functional block diagram of a position estimation system in accordance with First embodiment.
[FIG. 5] FIG. 5 is a view illustrating an example of a process for comparing image data with position information in the position estimation device.
[FIG. 6] FIG. 6 is a view illustrating an example of a change in a display screen of an input/output device in the mobile terminal.
[FIG. 7] FIG. 7 is a view illustrating another example of the display screen of the input/output device in the mobile terminal.
[FIG. 8] FIG. 8 is a chart illustrating an example of a control flow executed by the mobile terminal.
[FIG. 9] FIG. 9 is a chart illustrating an example of a position estimation process flow executed by the position estimation device.
[FIG. 10] FIG. 10 is a view illustrating an example of another device having some functions of the mobile terminal having some functions.
[FIG. 11] FIGs. 11A, 11B, and 11C are views illustrating an example of data structures of identification information, destination information, and guidance information that are exchanged between the mobile terminal and the position estimation device.
[FIG. 12] FIG. 12 is an example of a functional block diagram of a position estimation system in accordance with Second embodiment.
[FIG. 13] FIG. 13 is a chart illustrating an example of a control flow executed by the mobile terminal.
[FIG. 14] FIG. 14 is a chart illustrating an example of a position estimation process flow executed by the position estimation device.
[FIG. 15] FIG. 15 is an example of a functional block diagram of a position estimation system in accordance with Third embodiment.
[FIG. 16] FIG. 16 is a chart illustrating an example of a control flow executed by an automatic driving vehicle.
[FIG. 17] FIG. 17 is a chart illustrating an example of a position estimation process flow executed by the position estimation device.

### DESCRIPTION OF EMBODIMENTS

Embodiments of a position estimation program, a position estimation device, and a position estimation method of the present disclosure are described below with reference to figures. The position estimation program, the position estimation device, and the position estimation method of this disclosure are not limited to the following embodiments.

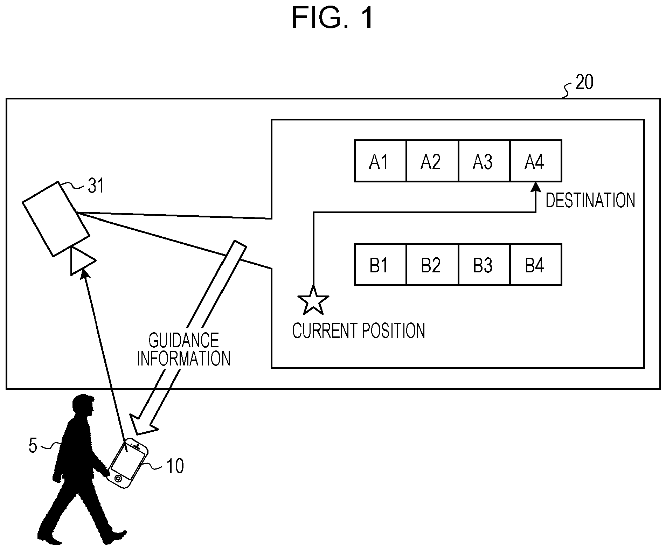

FIG. 1 is a conceptual view of an example of a position estimation system including a position estimation device. FIG. 1 illustrates the position estimation system in which a position estimation device 20 guides a mobile terminal 10 held by a user 5 to a user's destination. The mobile terminal 10 is an example of an information terminal for receiving current position information indicating the current position, which corresponds to transmitted identification information. The identification information is information for identifying a terminal that transmits the information, and may be an IP address of the terminal or a unique ID of the terminal. The position estimation device 20 acquires authentication information assigned to the mobile terminal 10 and the current position information pertaining to the mobile terminal 10 by an image-capture device 31 such as a camera. Based on the acquired authentication information and current position information, the position estimation device 20 generates guidance information indicating a route from the current position of the mobile terminal 10 to a destination. The position estimation device 20 transmits the generated guidance information to the mobile terminal 10.

The user 5 holding the mobile terminal 10 may refer to the guidance information received by the mobile terminal 10, thereby recognizing the route from the current position to the destination without using the GPS.

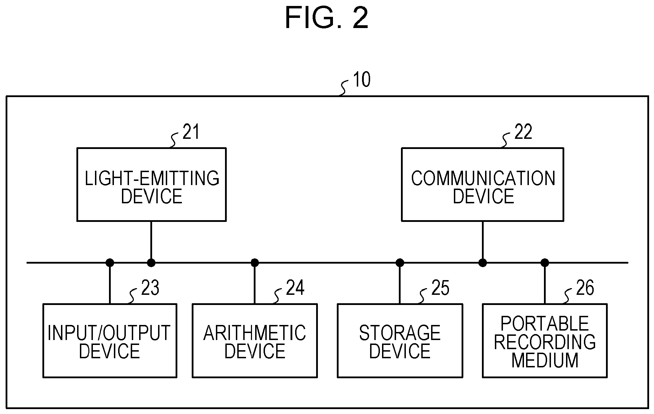

FIG. 2 is hardware configuration view of an example of the mobile terminal 10. The hardware configuration of the mobile terminal 10 is not limited to the configuration illustrated in FIG. 2.

The mobile terminal 10 has a light-emitting device 21, a communication device 22, an input/output device 23, an arithmetic device 24, a storage device 25, and a portable recording medium 26. The light-emitting device 21, the communication device 22, the input/output device 23, the arithmetic device 24, the storage device 25, and the portable recording medium 26 are interconnected via a bus or the like.

The light-emitting device 21 is a device that transmits identification information pertaining to the mobile terminal 10 and so on as an optical signal to the outside. The light-emitting device 21 may be a light-emitting element such as a light-emitting diode or a light-emitting pattern drawn on a liquid crystal display. Light emitted from the light-emitting device 21 may be visible light, or light having a longer or shorter wavelength than the visible light. The techniques of transmitting a particular signal via visible light is disclosed in, for example, International Publication Pamphlet No. WO 2016/001972, Japanese Patent No. 5760438, and Japanese Patent No. 5294096.

The communication device 22 is a device for connecting the mobile terminal 10 to a wired or wireless network. The network to be connected is, for example, LTE (Long Term Evolution), wired LAN (Local Area Network), or wireless LAN.

The input/output device 23 displays an UI (User Interface) that allows the user 5 to operate the mobile terminal 10. The input/output device 23 also displays information received by the mobile terminal 10 to present the information to the user 5. The input/output device 23 may be a combination of a keyboard and a liquid crystal display, or a touch panel display. The input/output device 23 may also input a destination by speech recognition, and output position information pertaining the destination by speech.

The arithmetic device 24 executes an arithmetic process for performing functions of the mobile terminal 10. The arithmetic device 24 may be a CPU (Central Processing Unit), a GPU (Graphics Processing Unit), a DSP (Digital Signal Processor), or a combination thereof.

The storage device 25 stores an OS (Operating System) and a basic program, which are performed by the arithmetic device 24. The storage device 25 stores the identification information pertaining to the mobile terminal 10 and the authentication information for logging into the mobile terminal 10. The storage device 25 stores data received by the communication device 22. The storage device 25 may be a memory device such as a ROM (Read Only Memory) and a RAM (Random Access Memory), or an HDD (Hard Disk Drive).

The portable recording medium 26 is a recording medium that is detachable from the mobile terminal 10. The portable recording medium 26 may be used to supplement the storage capacity of the storage device 25. The portable recording medium 26 may be a nonvolatile semiconductor memory such as a flash memory.

The light-emitting device 21 and the input/output device 23 may be configured of common hardware such as a touch panel display.

With the above-mentioned configuration, the mobile terminal 10 may transmit the authentication information to the outside in response to the request of the user 5, and present information received from the outside to the user 5.

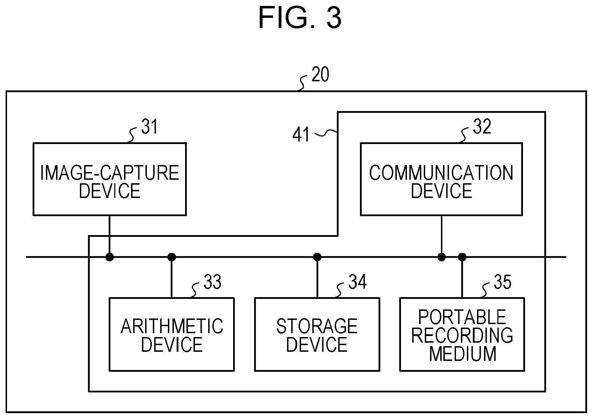

FIG. 3 is a hardware configuration view of the position estimation device 20. The hardware configuration of the position estimation device 20 is not limited to the configuration illustrated in FIG. 3.

The position estimation device 20 has an image-capture device 31 and an information processing device 41. The image-capture device 31 may be connected to the information processing device 41 via wired means such as USB (Universal Serial Bus) and wired LAN, or wireless means such as wireless LAN.

The image-capture device 31 is a device that captures an image of outside scenery with a certain angle view, and converts the image into image data. The image-capture device 31 captures an image of the outside scenery at a certain interval, and transmits image data to the information processing device 41. The image-capture device 31 detects the optical signal transmitted from the mobile terminal 10, and transmits image data including the detected optical signal to the information processing device 41. The image-capture device 31 is, for example, a digital video camera. The image-capture device 31 has a light-receiving element capable of detecting the wavelength of the optical signal transmitted from the mobile terminal 10. The light-receiving element capable of detecting the wavelength of the optical signal enables optical communication using light other than visible light. For example, a preset pilot pattern may be added to a head of a packet of the optical signal, and the optical signal may be detected when the information processing device 41 that has received image data from the image-capture device 31 or the image-capture device 31 detects the pilot pattern.

The information processing device 41 executes data processing based on the image data received from the image-capture device 31. Examples of the information processing device 41 include a personal computer and a server. The information processing device 41 has a communication device 32, an arithmetic device 33, a storage device 34, and a portable recording medium 35.

The communication device 32 is a device that connects the information processing device 41 to a wired or wireless network. Examples of the network to be connected include LTE, wired LAN, wireless LAN, and Wi-Fi.

The arithmetic device 33 executes an arithmetic process for achieving the required function of the information processing device 41. Examples of the arithmetic device include CPU, GPU, DSP, or any combination thereof.

The storage device 34 stores an OS (Operating System) and a basic program that are performed by the arithmetic device 33. The storage device 34 stores image data received from the image-capture device 31. The storage device 34 also stores position information corresponding to the angle view available to the image-capture device 31. The storage device 34 may be a memory device such as a ROM, a RAM, and an HDD.

The portable recording medium 35 is a recording medium that is detachable from the information processing device 41. The portable recording medium 35 may be used to supplement the storage capacity of the storage device 34. The portable recording medium 35 may be a nonvolatile semiconductor memory such as flash memory, or a detachable HDD.

With the above-mentioned configuration, in the position estimation device 20, the information processing device 41 may process image data captured by the image-capture device 31.

### [First embodiment]

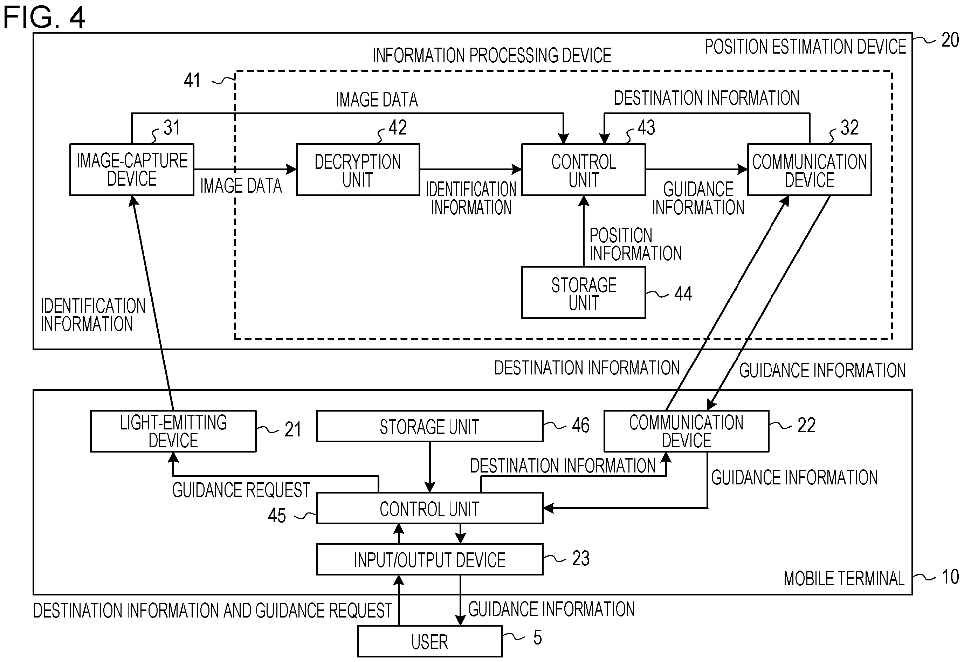

FIG. 4 is an example of a functional block diagram of a position estimation system in accordance with First embodiment. In FIG. 4, the position estimation system has a mobile terminal 10 and a position estimation device 20.

In FIG. 4, the mobile terminal 10 has a control unit 45 and a storage unit 46 as functional blocks. The control unit 45 is implemented by allowing the arithmetic device 24 in FIG. 2 to perform a program stored in a storage device 25 or a portable recording medium 26. The storage unit 46 is implemented by the storage device 25 and the portable recording medium 26 that store data or a program. The storage unit 46 stores identification information for uniquely identifying the mobile terminal 10. A light-emitting device 21, a communication device 22, and an input/output device 23 in the mobile terminal 10 in FIG. 4 are the same as the constituents having the same reference numerals in the mobile terminal 10 in FIG. 2.

In FIG. 4, the position estimation device 20 has an image-capture device 31 and an information processing device 41. The information processing device 41 has a decryption unit 42, a control unit 43, a storage unit 44, and a communication device 32 as functional blocks. The decryption unit 42 and the control unit 43 are implemented by allowing the arithmetic device 33 in FIG. 3 to perform a program stored in a storage device 34 or a portable recording medium 35. The storage unit 44 is implemented by the storage device 34 and the portable recording medium 35 that store data or a program. The storage unit 44 stores position information corresponding to image data captured by the image-capture device 31. The image-capture device 31 and the communication device 32 in the position estimation device 20 in FIG. 4 are the same as the constituents having the same reference numerals in the position estimation device 20 in FIG. 3.

The user 5 operates an input screen and so on displayed on the input/output device 23 in the mobile terminal 10, and inputs destination information and a guidance request of the user 5. The input/output device 23 transmits the inputted destination information and guidance request to the control unit 45. The control unit 45 encodes the received destination information, and transmits the encoded destination information to the communication device 22. The communication device 22 transmits the destination information received from the control unit 45 to the outside of the mobile terminal 10. The control unit 45 reads the identification information pertaining to the mobile terminal 10, which is stored in the storage unit 46, in response to the received guidance request. The control unit 45 generates a control signal for controlling the light-emitting device 21 based on the read identification information, and transmits the control signal to the light-emitting device 21. The light-emitting device 21 transmits the identification information pertaining to the mobile terminal 10 as an optical signal, based on the control signal received from the control unit 45.

The position estimation device 20 receives the destination information transmitted from the mobile terminal 10 via the communication device 32. The control unit 43 writes the destination information received by the communication device 32 into the storage unit 44. The position estimation device 20 captures an image of the optical signal transmitted from the mobile terminal 10 by the image-capture device 31. The image-capture device 31 detects the image including the optical signal, and transmits the image as image data to the decryption unit 42. The decryption unit 42 decrypts the optical signal included in the received image data, extracts the identification information, and transmits the extracted identification information to the control unit 43. The control unit 43 writes the received identification information into the storage unit 44. When receiving image data including the optical signal, the information processing device 41 may recognize that the guidance request is received from the mobile terminal 10 to start a process for generating guidance information.

Based on the image data received from the image-capture device 31 and the position information received from the storage unit 44, the control unit 43 calculates the current position where the optical signal is received from the mobile terminal 10 in the image data, based on the position information. The control unit 43 reads the destination information written into the storage unit 44. The control unit 43 generates the guidance information based on the calculated current position and the read destination information. The control unit 43 transmits the generated guidance information and the identification information corresponding to guidance information to the communication device 32. The communication device 32 adds the identification information to the guidance information received from the control unit 43, and transmits it to the outside. In the case where the position estimation device 20 communicates with the mobile terminal 10 using unique identification information such as a global IP address, the position estimation device 20 may designate the global IP address of the mobile terminal 10 that is a destination, and transmit guidance information to the destination. In this case, since the mobile terminal 10 on the reception side does not have to determine whether or not the information is information destined to itself, the guidance information may be transmitted to a particular mobile terminal 10 without adding the identification information to the guidance information. When the identification information transmitted from the mobile terminal 10 is ID information, the mobile terminal 10 may previously transmit the ID information and index information such as the global IP address from the communication device 22 to the communication device 32 of the position estimation device 20, and store the index information in the storage unit 44. In this case, by first detecting the ID information, the mobile terminal 10 may communicate with the position estimation device 20 using the global IP address of the mobile terminal 10.

In the mobile terminal 10, the communication device 22 receives the guidance information with the identification information from the position estimation device 20. The communication device 22 transmits the received guidance information to the control unit 45. The control unit 45 compares the identification information added to the received guidance information with the identification information stored in the storage unit 46, and determines that the received guidance information corresponds to the identification information transmitted from the own mobile terminal 10. When determining that the received guidance information corresponds to the identification information transmitted from the own mobile terminal 10, the control unit 45 generates image data to be displayed on the input/output device 23 based on the guidance information, and transmits the generated image data to the input/output device 23. The input/output device 23 displays the image data indicating the guidance information received from the control unit 45.

The number of cameras such as surveillance cameras installed in indoor facilities including movie theaters and shopping malls and outdoor facilities including stadiums and parking areas has increased in terms of security. In addition, for convenience of installation and management of captured images, the cameras are often connected to a network. The configuration in this embodiment is compatible with the camera installation mode in the facilities and thus, may be readily introduced into the existing facilities. That is, with the configuration in this embodiment, the mobile terminal 10 may identify the current position without installing a large number of special devices. The user 5 may view the guidance information displayed on the input/output device 23, to check the current position information, the destination information, and a route from the current position to a destination.

In the example, the input/output device is used as an image display device and however, may be a device that input the destination by speech recognition and output the guidance information by speech conversion.

Further, in the example, the position estimation device 20 executes the process for generating the guidance information based on the identification information and the destination information. However, in the case where the plurality of mobile terminals 10 simultaneously make guidance requests, a processing load of the position estimation device 20 becomes large. To decrease the processing load of the position estimation device 20, the position estimation device may execute only the process for estimating the current position, and generate the guidance information in the mobile terminal 10 based on the estimated current position.

Further, in the case where the mobile terminal 10 has a compass function, processes for generating and displaying the guidance information in consideration of the direction of the terminal may be executed. For example, a travelling direction may be displayed in consideration of the direction of the terminal.

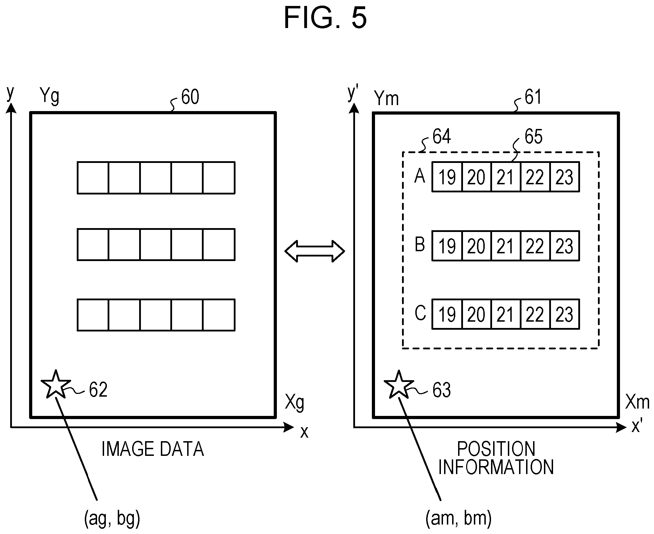

FIG. 5 is a view for describing an example of a process for comparing the image data with the position information in the position estimation device 20.

Image data 60 refers to image data including an optical signal, which is captured by the image-capture device 31 when the mobile terminal 10 receiving an identification signal from the light-emitting device 21 is present within the angle view of the image-capture device 31. An optical signal 62 in the image data 60 indicates an image-capture position of the optical signal issued from the mobile terminal 10.

Position information 61 refers to a two-dimensional image illustrating the position information previously stored in the storage unit 44, which corresponds to the angle view of the image-capture device 31. For example, seat position information 64 pertaining to seat positions in a concert hall, which corresponds to position coordinates, is recorded in the position information 61.

A process for generating the guidance information based on comparison of the image data 60 with the position information 61 is described below. The control unit 43 copies the position information 61, and generates the guidance information. The control unit 43 adds important information for guidance to the generated guidance information.

It is given that, in the image data 60, the largest number of pixels in the X-axis direction is Xg, and the largest number of pixels in the Y-axis direction is Yg. It is given that, in the position information 61, the largest number of pixels in the X-axis direction is Xm, and the largest number of pixels in the Y-axis direction is Ym. Xg may be different from Xm, and Yg may be different from Ym. However, it is desirable to set the position information such that Xg/Yg may be the same as Xm/Ym. By setting the Xg/Yg and Xm/Ym to be the same as each other, it is possible to improve the estimation accuracy as well as to reduce the calculated amount for position estimation.

In the case where coordinates of the light-emitting position in the image data 60 are (ag, bg), given that coordinates of the light-emitting position in the position information 61 are (am, bm), following relations are satisfied: am = ag x (Xm/Xg) and bm = bg x (Ym/Yg). According to the equations, the control unit 43 calculates coordinates of am and bm. The control unit 43 draws current position information 63 pertaining to the mobile terminal 10 at the calculated coordinates (am, bm) in the guidance information.

Based on the destination information received from the mobile terminal 10, the position estimation device 20 identifies a target seat position corresponding to the destination information from the seat position information 64 included in the position information 61. For example, in the case where the destination information received from the mobile terminal 10 indicates a seat A21, the position estimation device 20 identifies a seat 65 in the seat position information 64. The position estimation device 20 draws the position information pertaining to the identified seat 65 in the guidance information. The position estimation device 20 draws a guidance route so as to connect the current position information 63 drawn in the guidance information to the target seat 65.

As described above, the control unit 43 may generate the guidance information based on the image data acquired by the image-capture device 31 and the destination information received from the mobile terminal 10.

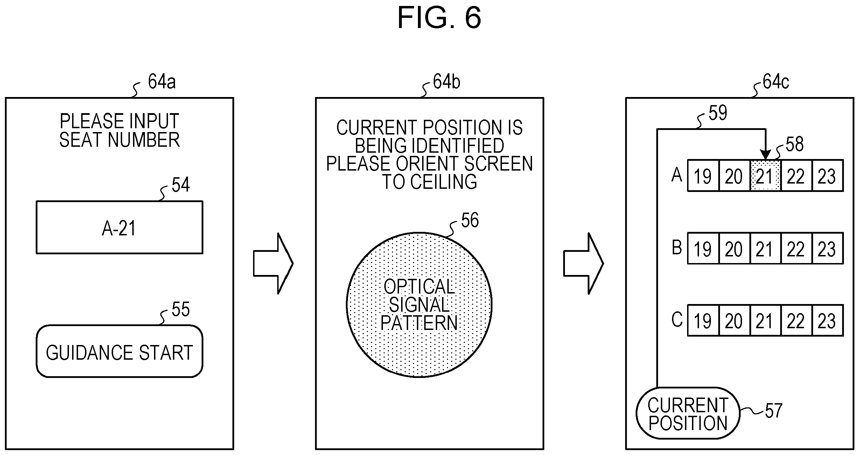

FIG. 6 illustrates an example of a change in the display screen of the input/output device 23 in the mobile terminal 10. A display screen 64a is a screen for the user 5 to input his/her destination information into the mobile terminal 10. A destination input box 54 is a GUI (Graphical User Interface) for the user 5 to input the destination information. For example, the user 5 inputs a sear number A-21 as the destination information into the destination input box 54. For example, the destination input box 54 presses a button corresponding to the destination among a plurality of predetermined seat numbers, thereby inputting the destination information. When a place where a particular product is placed is searched in a shop of the products, a particular product name may be inputted.

A button 55 is a GUI for the user 5 to activate the guidance process in the mobile terminal 10. The user 5 inputs the destination information in the destination input box 54 and then, presses the button 55 to allow the mobile terminal 10 to execute the guidance process. By inputting the destination information into the destination input box 54 to activate the guidance process, the button 55 may be omitted.

A display screen 64b is a screen for transmitting the identification information pertaining the mobile terminal 10 as the optical signal after start of the guidance process. Based on data acquired by converting the identification information pertaining the mobile terminal 10 and the destination information inputted by the user 5 into an optical signal pattern, an optical signal pattern 56 flashes the optical signal pattern 56 drawn on the input/output device 23. Since the optical signal is outputted from the display screen of the input/output device 23, a message for the user 5 indicating which direction the display screen of the input/output device 23 might be oriented, together with the optical signal pattern 56, may be drawn on the display screen 64b.

A display screen 64c is a screen on which the guidance information received from the position estimation device 20 is drawn as an image. The display screen 64c displays information 57 pertaining to the current position of the user 5 holding the mobile terminal 10, destination information 58, and route information 59 indicating a travelling route from the current position to the destination. The user 5 may travel while checking the guidance information displayed on the mobile terminal 10, to efficiently travel to the destination without using the GPS.

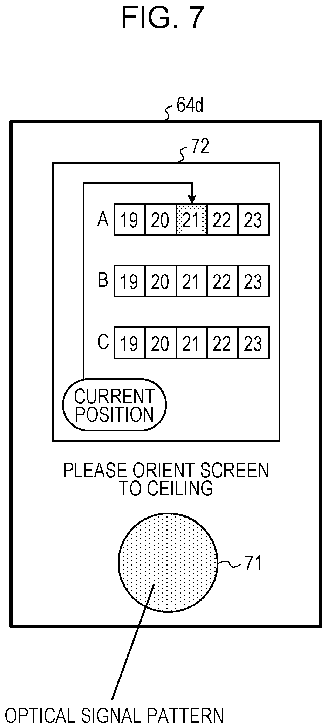

FIG. 7 illustrate another example of the display screen of the input/output device 23 in the mobile terminal 10. In this embodiment, a display screen 64d simultaneously displays a guidance information display portion 102 and an optical signal pattern 101. The user 5 holding the mobile terminal 10 travels according to the guidance information displayed on the guidance information display portion 102 while transmitting an optical signal. Based on the destination information, the identification information, and the image data capturing the optical signal, which are transmitted from the mobile terminal 10, the position estimation device 20 updates the guidance information, and transmits the updated guidance information to the mobile terminal 10. The mobile terminal 10 receives the newest guidance information, and updates the guidance information display portion 102 displayed on the display screen 64d. The user 5 may travel to a target seat A-21 while checking the newest guidance information displayed on the guidance information display portion 102.

In the case where the mobile terminal 10 has a compass function, travelling direction information may be displayed according to the direction of the mobile terminal.

Further, in the case where the mobile terminal 10 has a function to detect movement by using an acceleration sensor, the guidance information may be updated according to the detected travelling state. The compass function and the travelling detecting function may be used together to update information.

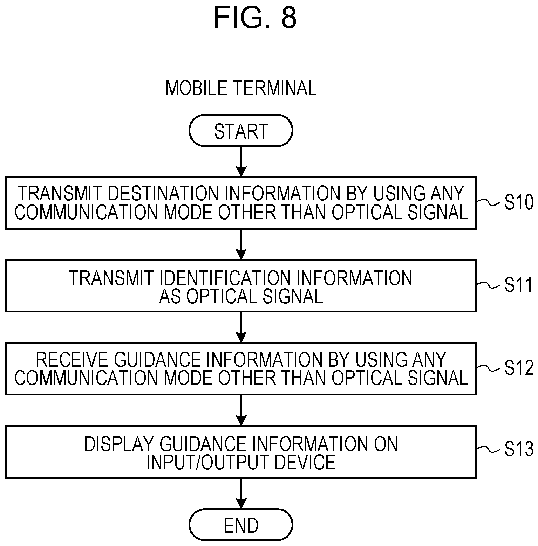

FIG. 8 illustrates an example of a control flow performed by the mobile terminal 10. The processes of the mobile terminal 10 may be executed by using the control unit 45.

The mobile terminal 10 transmits the destination information pertaining to the user 5 to the outside by means of any communication mode other than optical signal (Step S10). The mobile terminal 10 transmits the own identification information as the optical signal to the outside (Step S11). After an elapse of a certain time, the mobile terminal 10 receives the guidance information generated based on the transmitted destination information and the captured image data by means of any communication mode other than optical signal (Step S12). The mobile terminal 10 displays the received guidance information on the input/output device (Step S13).

As described above, the mobile terminal 10 may receive the guidance information in response to the identification information and the destination information by means of the optical signal and any communication mode other than optical signal.

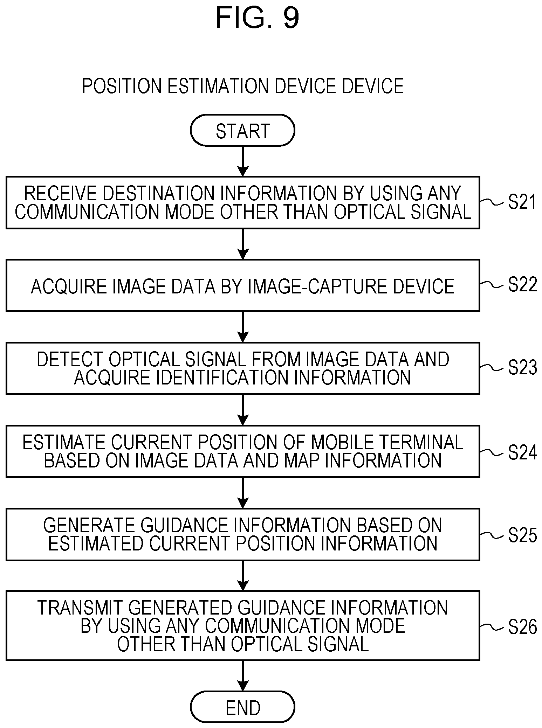

FIG. 9 is an example of a position estimation process flow executed by the position estimation device 20. The position estimation device 20 receives the destination information transmitted from the mobile terminal 10 by means of any communication mode other than optical signal (Step S21). The position estimation device 20 stores the received destination information in the storage unit 44. The position estimation device 20 acquires image data including the optical signal transmitted from the mobile terminal 10 by the image-capture device 31 (Step S22). The position estimation device 20 detects the image data including the optical signal, decrypts the optical signal included in the detected image data to acquire the identification information pertaining the mobile terminal 10 (Step S23). The position estimation device 20 estimates the current position of the mobile terminal 10 based on the image data including the optical signal and the position information stored in the storage unit 44 (Step S24). Based on the identification information included in the destination information stored in the storage unit 44, and the identification information corresponding to the estimated current position information, the position estimation device 20 generates the guidance information using the destination information and the current position information, which correspond to the same identification information (Step S25). The position estimation device 20 transmits the generated guidance information by means of any communication mode other than optical signal (Step S26).

According to the above-mentioned processes, the mobile terminal 10 may receive the guidance information according to the own identification information and destination information.

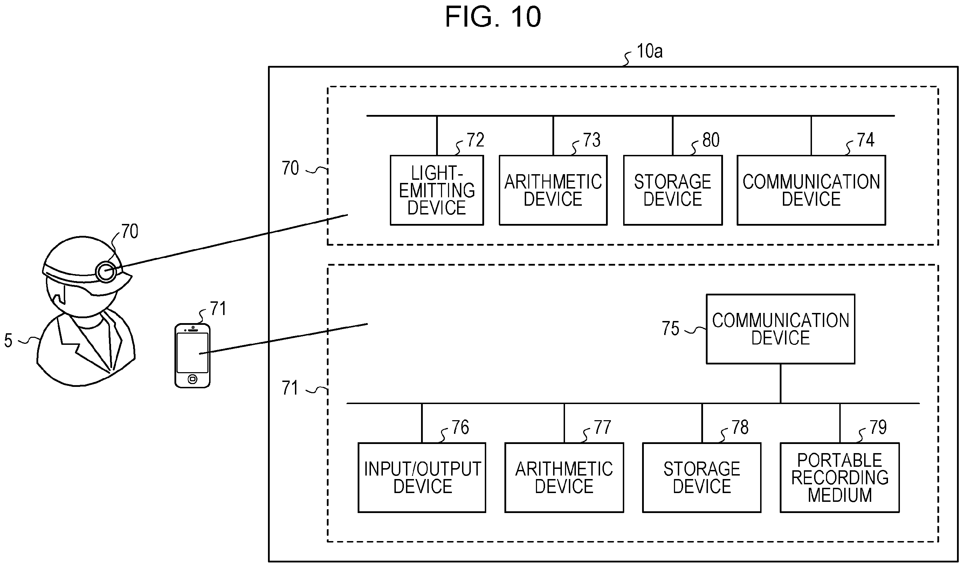

FIG. 10 illustrates an example of a mobile terminal 10a having some functions of the mobile terminal 10. The hardware configuration of the mobile terminal 10a is not limited to the configuration illustrated in FIG. 10. In FIG. 10, the mobile terminal 10a has a gadget 70 and a terminal 71. The gadget 70 communicates with the terminal 71 in a wireless or wired manner.

The gadget 70 has a light-emitting device 72, an arithmetic device 73, a storage device 80, and a communication device 74. The light-emitting device 72, the arithmetic device 73, the storage device 80, and the communication device 74 are interconnected via a bus or the like.

The light-emitting device 72 is a device that transmits identification information pertaining the mobile terminal 10a and so on as an optical signal to the outside. In the case where identification information is individually assigned to the gadget 70 to the terminal 71 in the mobile terminal 10a, the light-emitting device 72 may transmit the identification information pertaining either the gadget 70 or the terminal 71. The light-emitting device 72 may be implemented as a light-emitting element such as a light-emitting diode, or an optical signal pattern drawn on a liquid crystal display. Light emitted from the light-emitting device 72 may be visible light, or light having a longer or shorter wavelength than visible light.

The arithmetic device 73 controls the light-emitting device 72 and the communication device 74. Since the throughput required for the arithmetic device 73 is low, the arithmetic device 73 may be implemented by a microcomputer or DSP having a low throughput for saving of power consumption.

The storage device 80 stores an OS and a basic program that are performed by the arithmetic device 73. The storage device 80 stores identification information pertaining the gadget 70. The storage device 80 also stores a control signal for outputting the optical signal from the light-emitting device 72, which is received by the communication device 74. Examples of the storage device 80 include memory devices such as a ROM, a RAM, and an HDD.

The communication device 74 is a device for the gadget 70 to communicate with the terminal 71. Examples of the mode of communicating with the terminal 71 include Bluetooth (registered trademark), Wi-Fi direct, and USB. The communication device 74 may communicate with the terminal 71, as well as an external network via Wi-Fi, wired LAN, or the like.

The terminal 71 has a communication device 75, an input/output device 76, an arithmetic device 77, a storage device 78, and a portable recording medium 79. The communication device 75, the input/output device 76, the arithmetic device 77, the storage device 78, and the portable recording medium 79 are interconnected via a bus or the like.

The communication device 75 is a device for the terminal 71 to communicate with the gadget 70. Examples of the mode of communicating with the gadget 70 include Bluetooth (registered trademark), Wi-Fi direct, and USB (Universal Serial Bus). The communication device 75 may communicate with the terminal 71, as well as an external network via Wi-Fi, wired LAN, or the like.

The input/output device 76 displays a UI (User Inter face) for the user 5 to operate the terminal 71. The input/output device 76 also displays information received by the terminal 71, and displays the information to the user 5. The input/output device 76 may be the combination of a keyboard and a liquid crystal display, or a touch panel display.

The arithmetic device 77 executes an arithmetic process for achieving required functions for the terminal 71. The arithmetic device 77 may be a CPU (Central Processing Unit), a GPU (Graphics Processing Unit), a DSP (Digital Signal Processor), or any combination thereof.

The storage device 78 stores an OS and a basic program performed by the arithmetic device 77. The storage device 78 stores identification information pertaining the terminal 71 and authentication information for log-in to the terminal 71. The storage device 78 also stores data received by the communication device 75. Examples of the storage device 78 may be a memory device such as a ROM (Read Only Memory) and a RAM (Random Access Memory), or an HDD (Hard Disk Drive).

The portable recording medium 79 is a recording medium that is detachable from the terminal 71. The portable recording medium 79 may be used to supplement the storage capacity of the storage device 78. Examples of the portable recording medium 79 may be a nonvolatile semiconductor memory such as a flash memory.

As described above, the mobile terminal 10a enables communication between the light-emitting device and the input/output device that are individual devices. The user 5 may improve the degree of freedom in equipment in the case of using the mobile terminal 10a.

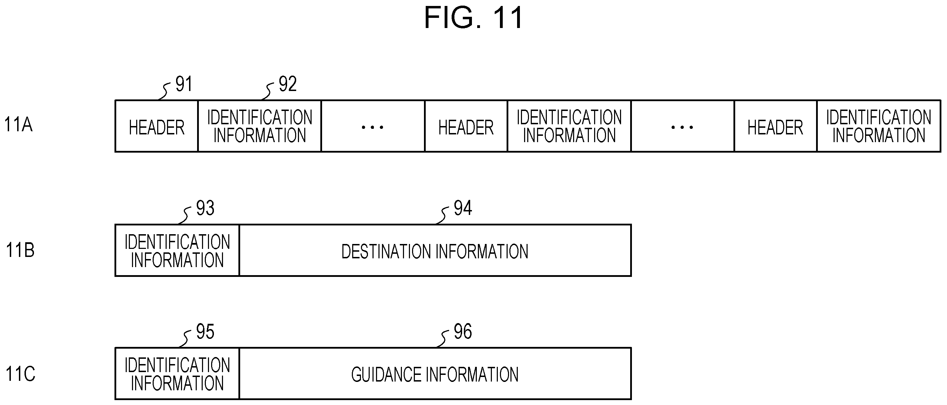

FIG. 11 illustrates an example of data structures of the identification information, the destination information, and the guidance information that are communicated between the mobile terminal 10 and the position estimation device 20.

FIG. 11A illustrates a data structure of the optical signal transmitted from the mobile terminal 10. The data structure of the optical signal has a plurality of pieces of identification information 92. Here, the identification information 92 is unique information for distinguishing the mobile terminal 10 from other mobile terminals. A header 91 is inserted ahead of each piece of the identification information 92. The header 91 is, for example, a pilot signal. The position estimation device 20 may use the received header 91 as a trigger to determine the start position of reception of the identification information 92. The optical signal has a directivity, and light in the mobile terminal 10 has to be captured by the image-capture device 31. Accordingly, when the holding angle of the mobile terminal 10 by the user 5 changes, the image-capture device 31 may fail to correctly receive the optical signal. As illustrated in FIG. 11A, the reliability of receiving the identification information 92 in the position estimation device 20 may be improved by repeatedly transmitting the identification information 92. Header information does not have to be transmitted, and only the identification information 92 may be transmitted once or plural times.

FIG. 11B illustrates a data structure of the destination information transmitted from the mobile terminal 10. The data structure of the destination information has identification information 93 and destination information 94. When transmitting the destination information 94, the mobile terminal 10 adds the identification information 93. The position estimation device 20 may compare the received identification information 92 with the identification information 93, thereby determining that the received optical signal and the destination information are transmitted from the same mobile terminal 10.

FIG. 11C illustrates an example of a data structure of the guidance information transmitted from the position estimation device 20. The data structure of the guidance information has identification information 95 and guidance information 96. The position estimation device 20 adds the same information as the received identification information 92, which is the identification information 95, to the generated guidance information 96. When receiving the guidance information, the mobile terminal 10 may compare the identification information 95 included in the guidance information with the own identification information, thereby determining that the received guidance information corresponding the own transmitted optical signal and the destination information. In the case where the global IP address is used as the identification information, or the position estimation device 20 may associate the identification information of the mobile terminal 10 with the global IP address as described above, the position estimation device 20 may identify the mobile terminal 10 that transmits the guidance information and thus, the identification information 95 does not have to be added.

### [Second embodiment]

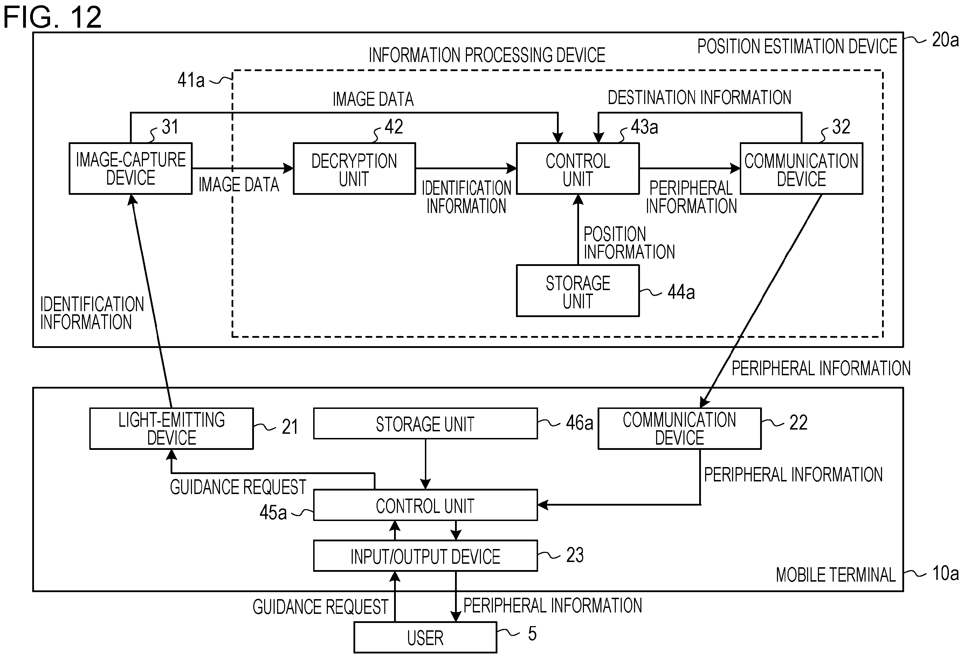

FIG. 12 is an example of a functional block diagram of a position estimation system in accordance with Second embodiment. In FIG. 12, the position estimation system has a mobile terminal 10a and a position estimation device 20a.

The mobile terminal 10a has the control unit 45a and the storage unit 46a as functional blocks. The control unit 45a is implemented by allowing the arithmetic device 24 in FIG. 2 to perform a program stored in the storage device 25 or the portable recording medium 26. The storage unit 46a is implemented by the storage device 25 and the portable recording medium 26 that store data or the program. The storage unit 46a stores identification information for uniquely identifying the mobile terminal 10a. The same constituents having the same reference numerals in the mobile terminal 10a in FIG. 12 as those in the mobile terminal 10 in FIG. 4 have the same functions.

The position estimation device 20a has an image-capture device 31 and an information processing device 41a. The information processing device 41a has the decryption unit 42, a control unit 43a, a storage unit 44a, and a communication device 32. The decryption unit 42 and the control unit 43a are implemented by allowing the arithmetic device 33 in FIG. 3 to perform a program stored in the storage device 34 or the portable recording medium 35. The storage unit 44a is implemented by the storage device 34 and the portable recording medium 35 that store data or the program. The storage unit 44a stores position information corresponding to data on an image captured by the image-capture device 31.

The storage unit 44a also stores peripheral information in a region of the position information. Examples of the peripheral information include information pertaining facilities and sightseeing spots in the periphery of the mobile terminal 10a, and information pertaining goods displayed in shops in the periphery of the mobile terminal 10a. The same constituents having the same reference numerals in the position estimation device 20a in FIG. 12 as those in the position estimation device 20 in FIG. 4 have the same functions. In the position estimation system in FIG. 12, the position estimation device 20a transmits the peripheral information that is information pertaining the periphery of the mobile terminal 10a to the mobile terminal 10a, based on the guidance request and the identification information that are received from the mobile terminal 10a. Based on the information received by the mobile terminal 10a, the user 5 of the mobile terminal 10a may acquire useful information for the user 5 in the periphery of the mobile terminal 10a.

The position estimation device 20a may store the peripheral information tagged by category in the storage unit 44a. When receiving tag information corresponding to the category of the peripheral information from the mobile terminal 10a, the position estimation device 20a may transmit the corresponding peripheral information, such that the mobile terminal 10a may receive only important peripheral information.

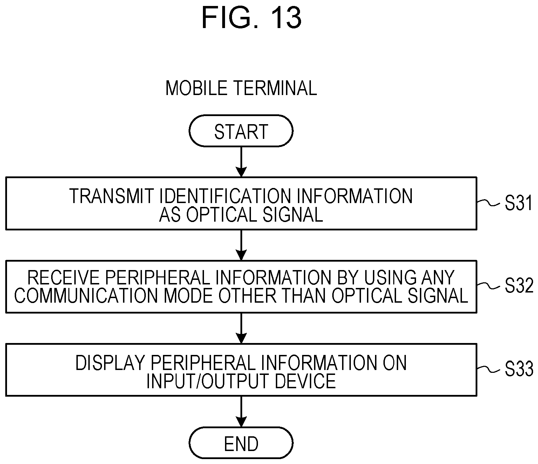

FIG. 13 is an example of a control flow performed by the mobile terminal 10a. Processes of the mobile terminal 10a may be executed by the control unit 45a.

The mobile terminal 10a transmits the own identification information as the optical signal to the outside (Step S31). After an elapse of a certain time, the mobile terminal 10a receives peripheral information generated based on data pertaining to the captured image by means of any communication mode other than optical signal (Step S32). The mobile terminal 10a displays the received peripheral information on the input/output device (Step S33).

As described above, the mobile terminal 10a may transmit the identification information via the optical signal, thereby receiving the peripheral information.

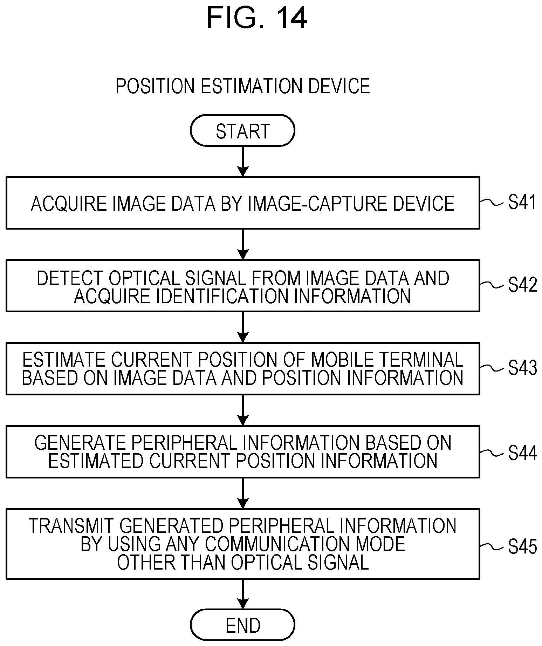

FIG. 14 illustrates an example of a position estimation process flow executed by the position estimation device 20a. The position estimation device 20a acquires the image data including the optical signal transmitted from the mobile terminal 10a by the image-capture device 31 (Step S41). The position estimation device 20a detects image data including the optical signal from image data, decrypts the optical signal included in the detected image data, and acquires identification information pertaining the mobile terminal 10a (Step S42). The position estimation device 20a estimates the current position of the mobile terminal 10a based on image data including the mobile terminal 10a and position information stored in the storage unit 44a (Step S43). The position estimation device 20a generates the peripheral information based on the identification information corresponding to the estimated current position information (Step S44). The peripheral information corresponding to the current position information is previously stored in the storage unit 44a. The position estimation device 20a transmits the generated peripheral information by means of any communication mode other than optical signal (Step S45). As described above, the mobile terminal 10a may transmits identification information to the position estimation device 20a, thereby receiving the peripheral information. Similar to the data structure of the guidance information in FIG. 11C, the data structure acquired when the peripheral information is transmitted from the position estimation device 20a include the peripheral information or the peripheral information with the identification information added.

The position information may be associated with the peripheral information, and stored in the storage unit 46a of the mobile terminal 10a. In this case, the position estimation device 20a estimates only position, and transmits position information from the communication device 32 to the communication device 22 of the mobile terminal 10a. The mobile terminal 10a may use the received position information and the peripheral information stored in the storage unit 46a to display the peripheral information to the user 5.

Also, in this embodiment, in the case where the mobile terminal 10a has a compass function, display of the peripheral information may be switched according to the orientation of the terminal. For example, when there are product racks on both sides of the user 5, information pertaining products placed on the rack facing the terminal may be displayed.

In the case where it is attempted to acquire the peripheral information pertaining to a product shop by using the technique as disclosed in PTL 2, generally, only information pertaining to a relatively large range such as a product category are may be acquired. Thus, to acquire information with a spatially high resolution, for example, information pertaining a product located at a particular position on a rack, it is required to decrease the interval of illuminations. By using the technique described in this embodiment, existing equipment may be utilized to acquire information with a spatially high resolution.

### [Third embodiment]

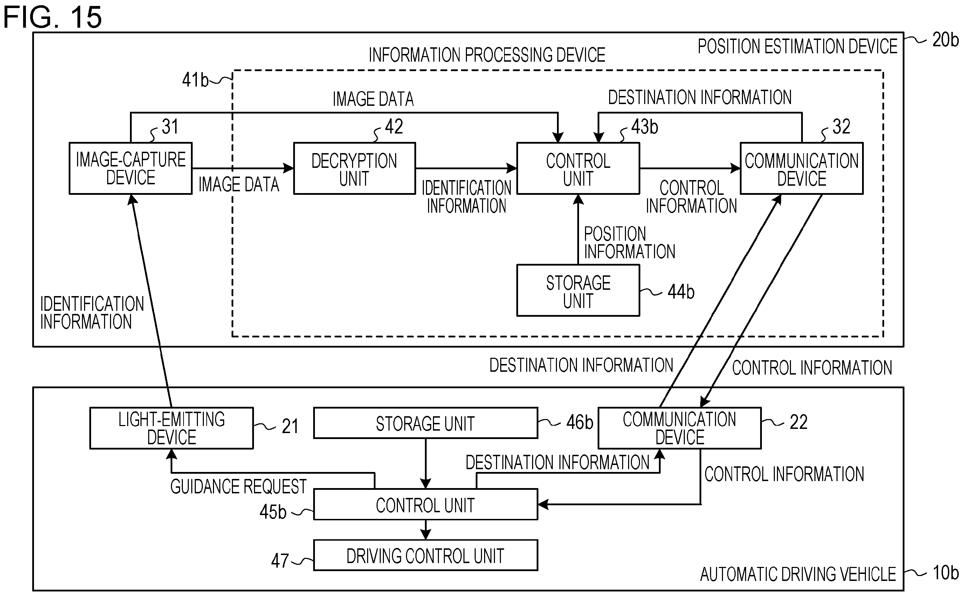

FIG. 15 illustrates an example of the functional block diagram of the position estimation system in accordance with Third embodiment. In FIG. 15, the position estimation system has an automatic driving vehicle 10b and a position estimation device 20b.

The automatic driving vehicle 10b is driving means capable of autonomously driving to a destination, based on information acquired from a plurality of sensors attached to the outside of the vehicle. The automatic driving vehicle 10b is an example of an information terminal that receives information pertaining to the position based on transmitted identification information. The automatic driving vehicle 10b has a light-emitting device 21, a communication device 22, a control unit 45b, a storage unit 46b, and a driving control unit 47. For example, the control unit 45b is implemented by allowing the arithmetic device 24 in FIG. 2 to perform a program stored in the storage device 25 or the portable recording medium 26. The driving control unit 47 controls a steering wheel, a motor, and a brake, which relate to travelling of the automatic driving vehicle 10b. The storage unit 46b is implemented by the storage device 25 and the portable recording medium 26 that store data or a program. The storage unit 46b stores identification information for uniquely identifying the automatic driving vehicle 10b.

The storage unit 46b also stores correction information pertaining to the attachment position of the light-emitting device 21 on the automatic driving vehicle 10b. Since the automatic driving vehicle 10b is larger than the mobile terminal 10, an error occurs in the estimated current position due to the mounting position of the light-emitting device 21. To correct such error, the automatic driving vehicle 10b adds the correction information to the identification information or the destination information, and transmits it to the position estimation device 20b. The position estimation device 20b may estimate the current position of the automatic driving vehicle 10b by using the received correction information more accurately. The same constituents having the same reference numerals in the automatic driving vehicle 10b in FIG. 15 as those in the mobile terminal 10 in FIG. 4 have the same functions.

The position estimation device 20b has an image-capture device 31 and an information processing device 41b. The information processing device 41b has a communication device 32, a decryption unit 42, a control unit 43b, and a storage unit 44b as functional blocks. The decryption unit 42 and the control unit 43b are implemented by allowing the arithmetic device 33 in FIG. 3 to perform a program stored in the storage device 34 or the portable recording medium 35. The storage unit 44b is implemented by the storage device 34 and the portable recording medium 35 that stores data or a program. The storage unit 44b stores position information corresponding to data on an image captured by the image-capture device 31. The same constituents having the same reference numerals in the position estimation device 20b in FIG. 15 as those in the position estimation device 20 in FIG. 4 have the same functions.

In the position estimation system in FIG. 15, the position estimation device 20b transmits control information for automatically driving the automatic driving vehicle 10b to a destination to the automatic driving vehicle 10b, based on the identification information and the destination information from the automatic driving vehicle 10b. For example, in the case where the destination is a contracted parking area for parking the automatic driving vehicle 10b, the position estimation device 20b may previously store contract information including a parking position in the storage unit 44b for each piece of identification information. The position estimation device 20b may identify the parking position based on the received identification information and the contract information, and generate control information.

The automatic driving vehicle 10b may autonomously travel to the destination based on the received control information. The automatic driving vehicle 10b may receive information pertaining a route from the received current position to a target parking area. A driver of the automatic driving vehicle 10b may refer to the route information received by the automatic driving vehicle 10b to drive to the destination.

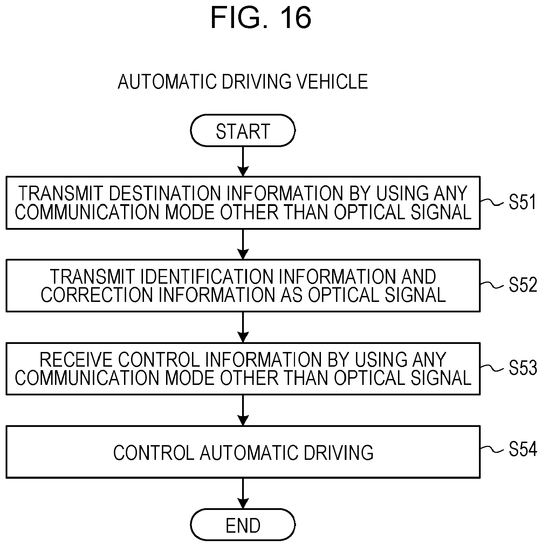

FIG. 16 illustrates an example of a control flow performed by the automatic driving vehicle 10b. The processes of the automatic driving vehicle 10b may be executed by using the control unit 45b.

The automatic driving vehicle 10b transmits destination information to the outside by any communication mode other than optical signal (Step S51). The automatic driving vehicle 10b transmits own identification information as an optical signal to the outside (Step S52). The automatic driving vehicle 10b further adds the attachment position of the light-emitting device 21 as correction information to identification information or destination information, and transmits it to the outside (Step S52).

After an elapse of a certain time, the automatic driving vehicle 10b receives control information generated based on the transmitted destination information and the captured image data by means of any communication mode other than optical signal (Step S53). The automatic driving vehicle 10b generates a driving control signal based on the received control information, and transmits the generated driving control signal to the driving control unit 47 (Step S54).

As described above, the automatic driving vehicle 10b may receive the control information according to the identification information and the destination information that are transmitted by means of the optical signal and any communication mode other than optical signal.

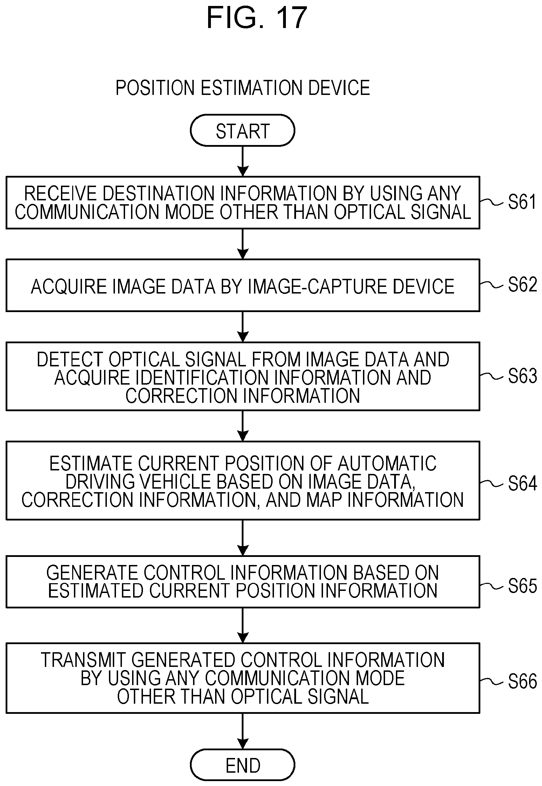

FIG. 17 illustrates an example of a position estimation process flow of the position estimation device 20b. The position estimation device 20b receives the destination information transmitted from the automatic driving vehicle 10b by means of any communication mode other than optical signal (Step S61). The position estimation device 20b stores the received destination information in the storage unit 44b. The position estimation device 20b acquires image data including an optical signal transmitted from the automatic driving vehicle 10b by the image-capture device 31 (Step S62). The position estimation device 20b detects the optical signal from the image data, decrypts the detected optical signal, and acquires identification information and correction information pertaining the automatic driving vehicle 10b (Step S63). The correction information may receive the identification information and correction information added to the destination information. The position estimation device 20b estimates the current position of the automatic driving vehicle 10b, based on the image data including the optical signal and the position information stored in the storage unit 44b (Step S64). Based on the identification information included in the destination information stored in the storage unit 44b, and the identification information corresponding to the estimated current position information, the position estimation device 20b generates control information using the destination information, the correction information, and the current position information that correspond to the same identification information (Step S65). The position estimation device 20b adds identification information to the generated control information, and transmits it by means of any communication mode other than optical signal (Step S66). The automatic driving vehicle 10b may receive control information having the own identification information, thereby receiving important control information for automatic driving from the current position to the destination.

### REFERENCE SIGNS LIST

- 10: Mobile terminal
- 20: Position estimation device
- 31: Image-capture device
- 41: Information processing device

## Claims

1. A position estimation program causing a computer (20) to execute a process, the process comprising:
acquiring (S22) a captured image (60) of an optical signal pattern (62) including identification information pertaining to a mobile terminal (10);
extracting (S23) the identification information from the captured image (60);
estimating (S24) a position of the mobile terminal by estimating a position of the image of the optical signal pattern (62) in the captured image (60); and
transmitting (S26) notification information corresponding to the estimated position,
wherein the transmitting (S26) includes identifying the mobile terminal (10) of a destination based on the identification information and transmitting the notification information to the identified mobile terminal (10).

2. The position estimation program according to claim 1, wherein the transmitting (S26) includes adding the identification information to the notification information such that only the mobile terminal (10) for transmitting the identification information receives the notification information.

3. The position estimation program according to claim 1, causing the computer (20) to further execute a process, the process comprising:
recording position information (61) for referring to a position of the optical signal pattern (62) in the captured image (60); and
estimating the position (63) of the mobile terminal (10) based on the image (60) and the position information (61).

4. The position estimation program according to claim 3, wherein the position information (61) has coordinates information pertaining to a region reflected on a camera, the region corresponding to an image-capture range of the camera that captures the image (60).

5. The position estimation program according to claim 4, wherein the estimating includes calculating a relative position (63) of the mobile terminal (10) in the image-capture range, and generating the notification information based on the calculated relative position (63) and the position information (61).

6. The position estimation program according to claim 1, wherein
the identification information includes correction information corresponding to a transmission position of the optical signal pattern (62) in the mobile terminal (10), and
the computer (20) further executing a process for correcting the estimated position based on the correction information.

7. A position estimation device (20) comprising:
an image-capture unit (31) configured to capture an image (60) of an optical signal pattern (62) including identification information pertaining to a mobile terminal (10) ;
a control unit (43) configured to extract the identification information from the captured image and estimate the position of the mobile terminal by estimating a position of the image of the optical signal pattern (62) in the captured image (60); and
a transmission unit (32) configured to transmit notification information pertaining to the estimated position by identifying the mobile terminal (10) of a destination based on the identification information and transmitting the notification information to the identified mobile terminal (10).

8. A position estimation method causing a computer (20) to execute a process, the process comprising:
capturing (S22) an image (60) of an optical signal pattern (62) including identification information pertaining to a mobile terminal (10);
extracting (S23) the identification information from the captured image (60);
estimating (S24) a position of the mobile terminal by estimating a position of the image of the optical signal pattern (62) in the captured image (60); and
transmitting (S26) notification information pertaining to the estimated position
wherein the transmitting (S26) includes identifying the mobile terminal (10) of a destination based on the identification information and transmitting the notification information to the identified mobile terminal (10).

## Patentansprüche

1. Positionsschätzungsprogramm, das einen Computer (20) veranlasst, einen Prozess auszuführen, wobei der Prozess umfasst:
Beschaffen (S22) eines aufgenommenen Bilds (60) einer optischen Signalstruktur (62), die auf ein Mobilendgerät (10) bezogene Identifikationsinformationen beinhaltet;
Extrahieren (S23) der Identifikationsinformationen aus dem aufgenommenen Bild (60);
Schätzen (S24) einer Position des Mobilendgeräts, indem eine Position des Bilds der optischen Signalstruktur (62) in dem aufgenommenen Bild (60) geschätzt wird; und
Übertragen (S26) von Benachrichtigungsinformationen entsprechend der geschätzten Position,
wobei das Übertragen (S26) Identifizieren des Mobilendgeräts (10) eines Ziels basierend auf den Identifikationsinformationen und Übertragen der Benachrichtigungsinformationen an das identifizierte Mobilendgerät (10) beinhaltet.

2. Positionsschätzungsprogramm nach Anspruch 1, wobei das Übertragen (S26) Hinzufügen der Identifikationsinformationen zu den Benachrichtigungsinformationen beinhaltet, sodass nur das Mobilendgerät (10) zum Übertragen der Identifikationsinformationen die Benachrichtigungsinformationen empfängt.

3. Positionsschätzungsprogramm nach Anspruch 1, das den Computer (20) veranlasst, weiter einen Prozess auszuführen, wobei der Prozess umfasst:
Aufzeichnen von Positionsinformationen (61), um sich auf eine Position der optischen Signalstruktur (62) in dem aufgenommenen Bild (60) zu beziehen; und
Schätzen der Position (63) des Mobilendgeräts (10) basierend auf dem Bild (60) und den Positionsinformationen (61).

4. Positionsschätzungsprogramm nach Anspruch 3, wobei die Positionsinformationen (61) Koordinateninformationen beinhalten, die sich auf ein auf eine Kamera reflektiertes Areal beziehen, wobei das Areal einem Bildaufnahmebereich der Kamera entspricht, die das Bild (60) aufnimmt.

5. Positionsschätzungsprogramm nach Anspruch 4, wobei das Schätzen beinhaltet, eine relative Position (63) des Mobilendgeräts (10) in dem Bildaufnahmebereich zu berechnen und die Benachrichtigungsinformationen basierend auf der berechneten relativen Position (63) und den Positionsinformationen (61) zu erzeugen.

6. Positionsschätzungsprogramm nach Anspruch 1, wobei
die Identifikationsinformationen Korrekturinformationen entsprechend einer Übertragungsposition der optischen Signalstruktur (62) in dem Mobilendgerät (10) beinhalten und
der Computer (20) weiter einen Prozess zum Korrigieren der geschätzten Position basierend auf den Korrekturinformationen ausführt.

7. Positionsschätzungsvorrichtung (20), umfassend:
eine Bildaufnahmeeinheit (31), die konfiguriert ist, ein Bild (60) einer optischen Signalstruktur (62) aufzunehmen, die auf ein Mobilendgerät (10) bezogene Identifikationsinformationen beinhaltet;
eine Steuerungseinheit (43), die konfiguriert ist, die Identifikationsinformationen aus dem aufgenommenen Bild zu extrahieren und die Position des Mobilendgeräts zu schätzen, indem eine Position des Bilds der optischen Signalstruktur (62) in dem aufgenommenen Bild (60) geschätzt wird; und
eine Übertragungseinheit (32), die konfiguriert ist, Benachrichtigungsinformationen zu übertragen, die sich auf die geschätzte Position beziehen, indem das Mobilendgerät (10) eines Ziels basierend auf den Identifikationsinformationen identifiziert wird und die Benachrichtigungsinformationen an das identifizierte Mobilendgerät (10) übertragen werden.

8. Positionsschätzungsverfahren, das einen Computer (20) veranlasst, einen Prozess auszuführen, wobei der Prozess umfasst:
Aufnehmen (S22) eines Bilds (60) einer optischen Signalstruktur (62), die auf ein Mobilendgerät (10) bezogene Identifikationsinformationen beinhaltet;
Extrahieren (S23) der Identifikationsinformationen aus dem aufgenommenen Bild (60);
Schätzen (S24) einer Position des Mobilendgeräts, indem eine Position des Bilds der optischen Signalstruktur (62) in dem aufgenommenen Bild (60) geschätzt wird; und
Übertragen (S26) auf die geschätzte Position bezogener Benachrichtigungsinformationen,
wobei das Übertragen (S26) Identifizieren des Mobilendgeräts (10) eines Ziels basierend auf den Identifikationsinformationen und Übertragen der Benachrichtigungsinformationen an das identifizierte Mobilendgerät (10) umfasst.

## Revendications

1. Programme d'estimation de position amenant un ordinateur (20) à exécuter un processus, le processus comprenant les étapes suivantes :
acquisition (S22) d'une image capturée (60) d'un modèle de signal optique (62) incluant des informations d'identification relatives à un terminal mobile (10) ;
extraction (S23) des informations d'identification à partir de l'image capturée (60) ;
estimation (S24) d'une position du terminal mobile en estimant une position de l'image du modèle de signal optique (62) dans l'image capturée (60) ; et
transmission (S26) d'informations de notification correspondant à la position estimée,
dans lequel la transmission (S26) inclut l'identification du terminal mobile (10) d'une destination sur la base des informations d'identification et la transmission des informations de notification au terminal mobile identifié (10).

2. Programme d'estimation de position selon la revendication 1, dans lequel la transmission (S26) inclut l'ajout des informations d'identification aux informations de notification de sorte que seul le terminal mobile (10) destiné à la transmission des informations d'identification reçoive les informations de notification.

3. Programme d'estimation de position selon la revendication 1, amenant l'ordinateur (20) à exécuter en outre un processus, le processus comprenant les étapes suivantes :
enregistrement d'informations de position (61) pour faire référence à une position du modèle de signal optique (62) dans l'image capturée (60) ; et
estimation de la position (63) du terminal mobile (10) sur la base de l'image (60) et des informations de position (61).

4. Programme d'estimation de position selon la revendication 3, dans lequel les informations de position (61) présentent des informations de coordonnées relatives à une région reflétée sur une caméra, la région correspondant à une plage de capture d'image de la caméra qui capture l'image (60).

5. Programme d'estimation de position selon la revendication 4, dans lequel l'estimation inclut le calcul d'une position relative (63) du terminal mobile (10) dans la plage de capture d'image, et la génération des informations de notification sur la base de la position relative calculée (63) et des informations de position (61).

6. Programme d'estimation de position selon la revendication 1, dans lequel
les informations d'identification incluent des informations de correction correspondant à une position de transmission du modèle de signal optique (62) dans le terminal mobile (10), et
l'ordinateur (20) exécute en outre un processus destiné à corriger la position estimée sur la base des informations de correction.

7. Dispositif d'estimation de position (20) comprenant :
une unité de capture d'image (31) configurée pour capturer une image (60) d'un modèle de signal optique (62) incluant des informations d'identification relatives à un terminal mobile (10) ;
une unité de commande (43) configurée pour extraire les informations d'identification à partir de l'image capturée et estimer la position du terminal mobile en estimant une position de l'image du modèle de signal optique (62) dans l'image capturée (60) ; et
une unité de transmission (32) configurée pour transmettre des informations de notification relatives à la position estimée en identifiant le terminal mobile (10) d'une destination sur la base des informations d'identification et en transmettant les informations de notification au terminal mobile identifié (10).

8. Procédé d'estimation de position amenant un ordinateur (20) à exécuter un processus, le processus comprenant les étapes suivantes :
capture (S22) d'une image (60) d'un modèle de signal optique (62) incluant des informations d'identification relatives à un terminal mobile (10) ;
extraction (S23) des informations d'identification à partir de l'image capturée (60) ;
estimation (S24) d'une position du terminal mobile en estimant une position de l'image du modèle de signal optique (62) dans l'image capturée (60) ; et
transmission (S26) d'informations de notification relatives à la position estimée
dans lequel la transmission (S26) inclut l'identification du terminal mobile (10) d'une destination sur la base des informations d'identification et la transmission des informations de notification au terminal mobile identifié (10).
